# EUROPÄISCHE PATENTSCHRIFT

(11) **EP 2 295 239 B1**
(45) Veröffentlichungstag und Bekanntmachung des Hinweises auf die Patenterteilung: **03.10.2012**
(21) Anmeldenummer: 10008605.7
(22) Anmeldetag: 18.08.2010
(51) Int. Cl.: B32B 17/10, E06B 5/16

(54) **Glasplatte, insbesondere Mehrscheiben-Verbundglasplatte**
Glass board, in particular multiple layer composite glass board
Plaque en verre, notamment plaque en verre composite à plusieurs plaques

(30) Priorität: 18.08.2009 DE 202009011157 U
(43) Veröffentlichungstag der Anmeldung: 16.03.2011
(73) Patentinhaber: Wiese, Reinhard, 59519 Möhnesee (DE)
(72) Erfinder: Wiese, Reinhard, 59519 Möhnesee (DE)
(74) Vertreter: Gesthuysen, Michael

(56) Entgegenhaltungen:
- EP-A1- 0 753 638
- EP-A2- 1 020 605
- WO-A1-2008/110021
- DE-U1-202008 016 781

## Beschreibung

Die Erfindung betrifft eine Glasplatte mit den Merkmalen des Oberbegriffs von Anspruch 1.

In erster Linie geht es um eine Mehrscheiben-Verbundglasplatte, die für Brandschutzverglasungen bestimmt und geeignet ist.

Nach EN 13501-2 wird die Klassifizierung von Brandschutzverglasungen durch verschiedene Buchstaben und Zahlen gekennzeichnet. Beispielsweise gewährleistet eine Brandschutzverglasung der Klasse F30 den Raumabschluss gegenüber Feuer, heißen Gasen und Rauch für einen Zeitraum von 30 Minuten. Eine Brandschutzverglasung F90 leistet entsprechendes für 90 Minuten. Insgesamt darf dazu auf die entsprechenden Normen, insbesondere EN 13501-2, verwiesen werden.

Für Brandschutzzwecke besonders geeignet ist eine Mehrscheiben-Verbundglasplatte, die aus mindestens zwei äußeren Glasscheiben aus Einscheibensicherheitsglas oder Floatglas besteht, zwischen denen eine transparente Brandschutzschicht aus einem gelartigen, vorzugsweise klebenden Brandschutzwerkstoff vollflächig angeordnet ist. Im Brandfall zerspringt die dem Brandherd zugewandte äußere Glasscheibe. Der zuvor eingeschlossene transparente Brandschutzwerkstoff der dünnen Brandschutzschicht schäumt nun auf und bildet einen opaken Hitzeschutz. Dieser verhindert über eine erhebliche Zeit den Durchtritt von Wärmestrahlung, wirkt also als Isolierung. In Abhängigkeit von der Gesamtdicke der Mehrscheiben-Verbundglasplatte kann man die Feuerwiderstandszeit entsprechend beeinflussen und eine entsprechende Brandschutzklasse erreichen.

Eine höhere Feuerwiderstandsklasse erlangt man durch mehrlagige Anordnungen, beispielsweise durch zwei äußere und zwei innere Glassscheiben und insgesamt drei dazwischen angeordnete Brandschutzschichten aus Brandschutzwerkstoff. Ist die dem Brandherd zugewandte äußere Glasscheibe gesplittert und die dort liegende Brandschutzschicht aufgeschäumt, so dauert es eine Weile, bis diese Seite der Verbundglasplatte so weiter erhitzt worden ist, dass die nächstfolgende innere Glasscheibe splittert und die dahinter liegende nächste Brandschutzschicht aus Brandschutzwerkstoff in entsprechender Weise aufschäumt. So dauert es dann eine ganze Weile bis die Mehrscheiben-Verbundglasplatte insgesamt, gewissermaßen Schicht für Schicht, zerstört wird.

Es liegt auf der Hand, dass mit größerer Dicke der Mehrscheiben-Verbundglasplatte deren Einbaugewicht ansteigt, was die konstruktiven Anforderungen an die Aufhängung und Halterung der Verbundglasplatte erhöht.

In der Praxis findet man solche Brandschutz-Verbundglasplatten mit zwei äußeren Glasscheiben und einer aus mehreren inneren Glasscheiben und dazwischen angeordneten transparenten Brandschutzschichten bestehenden inneren Verbundglasplatte. Diese ist mit den äußeren Glasscheiben verklebt, entweder selbst nochmals über Brandschutzschichten oder über normale Klebeschichten (siehe z. B. EP 1020 605 A2).

Der gelartige Brandschutzwerkstoff hat die Eigenschaft, randseitig nach außen zwischen den Glasscheiben, zwischen denen er angeordnet ist, herauszuquellen. Deswegen müssen Mehrscheiben-Verbundglasplatten der hier beschriebenen Art mit einem randseitig außen umlaufenden Kantenschutz versehen sein (EP 1 020 605 A2).

Das hier relevante Problemfeld für Mehrscheiben-Verbundglasplatten der in Rede stehenden Art ist das Gewicht derartiger Glasplatten. Sind entsprechende Durchtrittsöffnungen für den Bolzen eines Scharniers oder einer Halterung unmittelbar in der Glasplatte ausgebildet, so entstehen insbesondere beim Gesamtgewicht mehrlagiger Verbundglasplatten für Brandschutzzwecke erhebliche Kantenpressungen. Es ist nicht selten, dass die Glasplatten deshalb an den Durchtrittsöffnungen splittern.

Bei der bekannten Glasplatte der in Rede stehenden Art, von der die Erfindung ausgeht (DE 20 2048 016 781 U1) ist die Hülse an der Durchtrittsöffnung für einen Bolzen so ausgeführt, dass Druckkräfte beim Anziehen der Verbindungsschraube durch eine Gegenplatte von der Brandschutzschicht ferngehalten werden. Über das Material der Hülse wird hier nichts weiter gesagt.

Aus weiterem Stand der Technik (WO 2008/11021 A1) ist für sich eine Hülse für einen entsprechenden Bolzen in einer Durchtrittsöffnung einer Glasplatte bekannt, die aus einem chemisch inerten Material wie Glas, Keramik oder Kunststoff besteht.

Die bisherige Konstruktion der schweren Glasplatten, um die es hier geht, im Bereich der Durchtrittsöffnung für einen Bolzen ist verbesserungsfähig, so dass der Lehre der Erfindung das Problem zugrunde liegt, Glasplatten der in Rede stehenden Art, insbesondere Mehrscheiben-Verbundglasplatten, konstruktiv zu verbessern.

Nach der Lehre der Erfindung ist die Durchtrittsöffnung in einer Glasplatte für einen Bolzen eines Scharniers oder einer Halterung an der Innenseite mittels einer Hülse aus Hartholz bewehrt. Besonders bevorzugt ist dabei, dass die Hülse aus Hartholz aus einem Panzersperrholz oder einem mit Phenolharz getränkten und verleimten Multiplexholz besteht.

Es hat sich gezeigt, dass, insbesondere bei schweren, mehrlagigen Mehrscheiben-Verbundglasplatten, am Bolzen ganz erhebliche Kantenpressungen auftreten. Diese werden über eine Hartholzhülse in besonders geschickter Weise aufgefangen und gleichmäßig in die Glasplatte eingeleitet. Erstaunlicherweise ist Hartholz ein für diese Zwecke nahezu optimales Material. Gerade für Brandschutzanwendungen kann man an dieser Stelle Kunststoff nicht verwenden. Metall hat letztlich eine zu geringe Elastizität. Hartholz hat hier genau die richtigen Werte. Überdies hat Hartholz auch gegenüber Feuer einen erheblichen Widerstand. Es verkohlt langsam, setzt aber keine gefährlichen Dämpfe frei.

Die Lehre der Erfindung ist besonders zweckmäßig realisierbar bei einer Mehrscheiben-Verbundglasplatte mit den Merkmalen von Anspruch 3.

Bevorzugte Ausgestaltungen und Weiterbildungen sind Gegenstand der weiteren Unteransprüche.

Derartige Mehrscheiben-Verbundglasplatten findet man insbesondere für rahmenlose Türblätter, Fensterflügel, Klappenflügel oder Oberlichter. Selbstverständlich lassen sich diese Mehrscheiben-Verbundglasplatten auch als feststehende Elemente in Rahmen oder rahmenlos einsetzen.

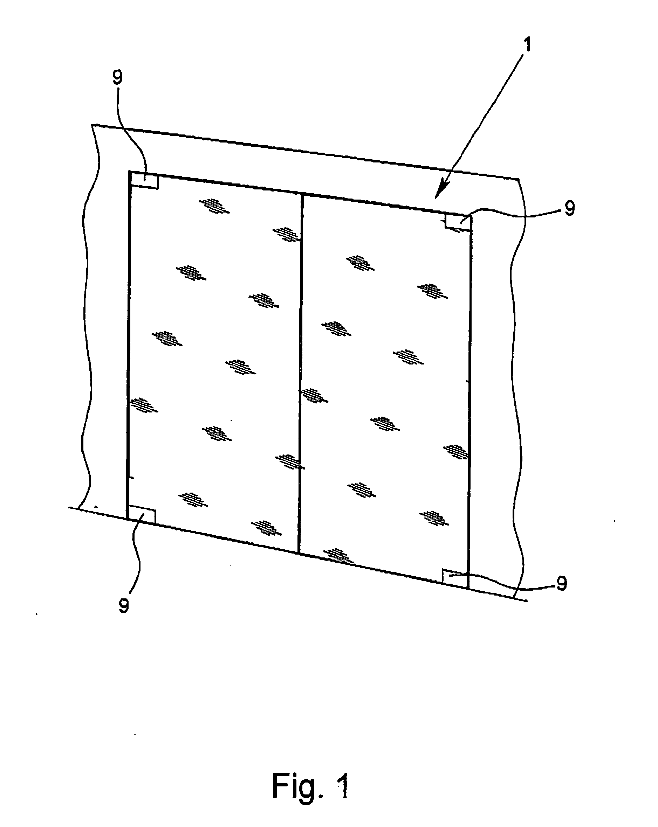

Im Folgenden wird die Erfindung anhand einer lediglich ein bevorzugtes Ausführungsbeispiel darstellenden Zeichnung näher erläutert. Im Zuge der Erläuterung des bevorzugten Ausführungsbeispiels werden auch generell interessante konstruktive Besonderheiten der Erfindung erläutert. In der Zeichnung zeigt
- Fig. 1: in schematischer Darstellung eine Mehrscheiben-Verbundglasplatte in perspektivischer Ansicht, hier als rahmenloses Türblatt ausgeführt,
- Fig. 2: ausschnittweise, einen Schnitt am Rand einer Mehrscheiben-Verbundglasplatte im Bereich eines Scharniers,
- Fig. 3: den Rand der Verbundglasplatte aus Fig, 2 nochmals ausschnittweise und in vergrößerter Darstellung.

Gegenstand der Darstellung ist eine Mehrscheiben-Verbundglasplatte mit je einer äußeren Glasscheibe 1 und mindestens einer zwischen den äußeren Glasscheiben 1 angeordneten inneren Glasscheibe 2 und mit mindestens einer zwischen einer äußeren Glasscheibe 1 und einer inneren Glasscheibe 2 oder zwischen zwei inneren Glasscheiben 2 angeordneten, dünnen Brandschutzschicht 3 aus einem transparenten, beim Erhitzen aufschäumenden und einen opaken Hitzeschutz bildenden Brandschutzwerkstoff, wobei die Abmessungen Länge und Breite der äußeren Glasscheiben 1 im wesentlichen identisch sind.

Im dargestellten Ausführungsbeispiel liegen insgesamt drei innere Glasscheiben 2 vor, zwischen denen sich zwei dünne Brandschutzschichten 3 befinden. Die Außenflächen der inneren Glasscheiben 2 sind mit den Innenflächen der äußeren Glasscheiben 1 in normaler Weise verklebt, beispielsweise mittels einer typischen Verbundglas-Klebefolie.

Alle einzelnen Glasscheiben 1, 2 der hier dargestellten Verbundglasplatte bestehen im dargestellten Ausführungsbeispiel aus Einscheiben-Sicherheitsglas oder aus Floatglas.

Die dünnen Brandschutzschichten 3 zwischen den inneren Glasscheiben 2 im dargestellten Ausführungsbeispiel bestehen aus einem vorzugsweise gelartigen Brandschutzwerkstoff, der im Normalzustand völlig transparent ist. Bei Erhitzung über bestimmte Temperaturen hinaus schäumt dieser Brandschutzwerkstoff auf, wird opak und bildet so einen opaken Hitzeschutz vollflächig auf der entsprechenden Glasscheibe 2. Die Zusammensetzung des gelartigen Brandschutzwerkstoffes dieser Brandschutzschichten 3 ist ein Betriebsgeheimnis des jeweiligen Herstellers. Die Zusammensetzung wird laufend optimiert.

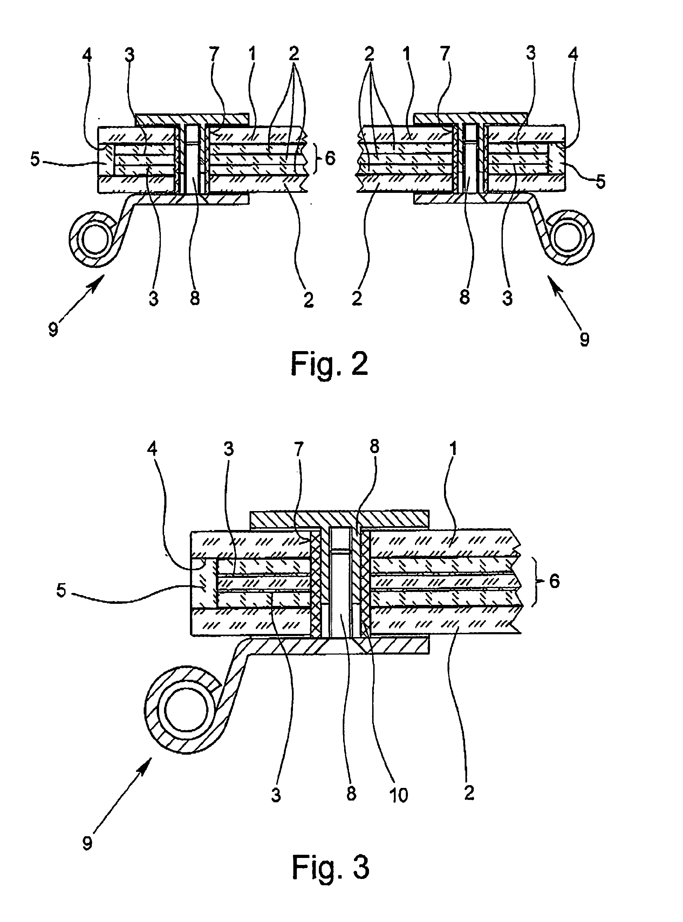

Im dargestellten Ausführungsbeispiel ist vorgesehen, siehe insbesondere Fig. 2 und 3, dass die Abmessungen Länge und Breite der inneren Glasscheiben 2 geringer sind als die Abmessungen Länge und Breite der äußeren Glasscheiben 1 dergestalt, dass die äußeren Glasscheiben 1 randseitig über die innere Glasscheibe 2 oder die inneren Glasscheiben 2 überstehen, und dass der von den überstehenden Rändern der äußeren Glasscheiben 1 und dem Rand oder den Rändern der inneren Glasscheibe 2 bzw. Glasscheiben 2 gebildete streifenartige Freiraum 4 mit einem transparenten Abschlussmaterial 5 dicht und vorzugsweise außen bündig ausgefüllt ist. Es empfiehlt sich, jedenfalls insgesamt vier Abschlussleisten als Abschlussmaterial 5 vorzusehen, je eine gerade Abschlussleiste, vorzugsweise eine Glasleiste, an jeder Schmalseite der Verbundglasplatte im entsprechenden Freiraum 4.

Fig. 2 und 3 kann man entnehmen, wie die das Abschlussmaterial 5 bildende transparente Abschlussleiste bündig in den Freiraum 4, diesen dicht ausfüllend eingesetzt ist Die Abschlussleisten, die das Abschlussmaterial 5 bilden, verhindern das Herausdrücken des Brandschutzwerkstoffes der Brandschutzschichten 3 zwischen den Glasscheiben 2 und das Eindringen von Feuchtigkeit, die sonst zu Verfärbungen führen würde. Sie ersetzen den beim Stand der Technik vorhandenen Rahmen bzw. das entsprechende Kantenschutzband am äußeren Rand. Die Abschlussleisten 5 sind mit den äußeren Glasscheiben 1 verklebt und können auch mit dem Außenrand der inneren Glasscheiben 2 verklebt sein,

Anstelle von Abschlussleisten kann auch ein andersartiges Abschlussmaterial 5 verwendet werden. Beispielsweise könnte man sich vorstellen, den äußeren, umlaufenden Freiraum 4 einfach mit einem transparenten zähflüssigen Werkstoff, der anschließend aushärtet, auszufüllen. Wesentlich ist, dass auch so die Rahmenlosigkeit der Mehrscheiben-Verbundglasplatte gewährleistet ist.

Von besonderem Vorteil ist es, wenn das Abschlussmaterial 5 den gleichen oder einen im Wesentlichen gleichen Brechungsindex aufweist wie die äußeren Glasscheiben 1 und vorzugsweise auch die inneren Glasscheiben 2 und die Brandschutzschichten 3. Jedenfalls sollte keine zu große Abweichung festzustellen sein.

Das in Fig. 2 und 3 in besonderer Weise dargestellte Ausführungsbeispiel zeichnet sich dadurch aus, dass mehrere innere Glasscheiben 2 mit übereinstimmenden Abmessungen Länge und Breite und dazwischen angeordneten transparenten Brandschutzschichten 3 vorgesehen und, vorzugsweise, als eine zusammenhängende innere Verbundglasplatte 6 ausgeführt sind. Die Verbundglasplatte 6 aus den inneren Glasscheiben 2 und den dazwischen liegenden Brandschutzschichten 3 ist also ein eigenes handhabungsfähiges Halbfabrikat, das dann mit den äußeren Glasscheiben 1 komplettiert wird, so dass sich die umlaufenden Freiräume 4 ergeben, in die dann das Abschlussmaterial 5, vorzugsweise in Form von entsprechenden Abschlussleisten 5 aus Glas, eingesetzt und eingeklebt wird

Insbesondere ist vorgesehen, dass die innere Verbundglasplatte 6 mit den äußeren Glasscheiben 1 normal oder mittels dünner Brandschutzschichten 3 verklebt ist.

In einem Beispielfall kann eine als Türblatt vorgesehene Mehrscheiben-Verbundglasplatte eine Länge von 250 cm und eine Breite von 130 cm aufweisen. Das ist schon ein recht großes Türblatt. Im Beispielfall kann dann vorgesehen sein, dass die Dicke der äußeren Glasscheiben 1 und der inneren Glasscheiben 2 jeweils etwa 5 mm und die Schichtdicke der Brandschutzschichten 3 und ggf. Klebeschichten jeweils etwa 1 mm beträgt. Insgesamt wäre es dann so, dass die Gesamtdicke der Mehrscheiben-Verbundglasplatte mit zwei äußeren Glasscheiben 1 und zwei inneren Glasscheiben 2 etwa 23 mm beträgt.

Im zuvor erläuterten Beispielfall wäre es zweckmäßig, wenn die Dicke der Streifen aus Abschlussmaterial 5 etwa 11 bis 12 mm beträgt. Dadurch berücksichtigt man, dass die Dicke der Klebeschichten, mit denen die Streifen aus Abschlussmaterial 5 in den Freiräumen 4 eingeklebt werden, etwas geringer ist als die Dicke von etwa 1 mm der Brandschutzschichten 3.

Insgesamt gewinnt die Konstruktion besondere Bedeutung dadurch, dass die Mehrscheiben-Verbundglasplatte rahmenlos ausgeführt ist. Besondere Anwendungsfelder sind rahmenlose Türblätter, Fenterflügel, Klappenflügel oder Oberlichter.

Fig. 2 und 3 lassen die erfindungsgemäße Besonderheit der hiesigen Konstruktion erkennen. Diese Besonderheit ist insbesondere dann bedeutsam, wenn es sich um schwere, mehrlagige Mehrscheiben-Verbundglasplatten handelt. Diese müssen, wenn sie rahmenlos sind, mit Durchtrittsöffnungen 7 für Bolzen 8 von Scharnieren 9 oder Halterungen versehen sein.

Im dargestellten Ausführungsbeispiel ist vorgesehen, dass die Durchtrittsöffnung 7 an der Innenseite mittels einer Hülse 10 aus Hartholz bewehrt ist. Insbesondere ist vorgesehen, dass die Hülse 10 aus Hartholz aus einem Panzersperrholz oder einem mit Phenolharz getränkten und verleimten Multiplexholz besteht.

Oben ist bereits erläutert worden, welche Vorteile und überraschenden Eigenschaften eine solche Hülse 10 aus Hartholz im Vergleich mit anderen Materialien gerade für Brandschutzzwecke hat.

Die Hülse 10 dient gleichzeitig auch als Abdichtung für die Brandschutzschichten 3 der inneren Verbundglasplatte 6, so dass auch an den Durchtrittsöffnungen 7 kein Brandschutzwerkstoff herausquellen kann.

## Patentansprüche

1. Glasplatte, vorzugsweise Mehrscheiben-Verbundglasplatte,
mit mindestens einer Durchtrittsöffnung (7) für einen Bolzen (8) eines Scharniers (9) oder einer Halterung,
wobei die Durchtrittsöffnung (7) an der Innenseite mittels einer Hülse (10) bewehrt ist,
**dadurch gekennzeichnet,**
**dass** die Hülse (10) aus Hartholz besteht.

2. Glasplatte nach Anspruch 1, **dadurch gekennzeichnet,**
**dass** die Hülse (10) aus Hartholz aus einem Panzersperrholz oder einem mit Phenolharz getränkten und verleimten Multiplexholz besteht.

3. Glasscheibe nach Anspruch 1 oder 2, **dadurch gekennzeichnet,**
**dass** sie ausgeführt ist als Mehrscheiben-Verbundglasplatte mit je einer äußeren Glasscheibe (1) und mindestens einer zwischen den äußeren Glasscheiben (1) angeordneten inneren Glasscheibe (2) und mit mindestens einer zwischen einer äußeren Glasscheibe (1) und einer inneren Glasscheibe (2) oder zwischen zwei inneren Glasscheiben (2) angeordneten, dünnen Brandschutzschicht (3) aus einem transparenten, beim Erhitzen aufschäumenden und einen Hitzeschutz bildenden Brandschutzwerkstoff,
**dass** die Abmessungen Länge und Breite der äußeren Glasscheiben (1) im Wesentlichen identisch sind,
**dass** die Abmessungen Länge und Breite der inneren Glasscheibe (2) oder der inneren Glasscheiben (2) geringer sind als die Abmessungen Länge und Breite der äußeren Glasscheiben (1) dergestalt, dass die äußeren Glasscheiben (1) randseitig über die innere Glasscheibe (2) oder die inneren Glasscheiben (2) überstehen, und
**dass** der von den überstehenden Rändern der äußeren Glasscheiben (1) und dem Rand oder den Rändern der inneren Glasscheibe (2) bzw. Glasscheiben (2) gebildete streifenartige Freiraum (4) mit einem transparenten Abschlussmaterial (5) dicht und vorzugsweise außen bündig ausgefüllt ist,
wobei das transparente Abschlussmaterial (5) vorzugsweise den gleichen oder einen ähnlichen Brechungsindex wie die Glasscheiben (1, 2) aufweist.

4. Glasplatte nach Anspruch 3, **dadurch gekennzeichnet,**
**dass** die Hülse (10) so dimensioniert ist, dass sie die Durchtrittsöffnung (7) in der Glasplatte im Passsitz ausfüllt und als Abdichtung für die Brandschutzschichten (3) wirkt.

5. Glasplatte nach Anspruch 3 oder 4, **dadurch gekennzeichnet,**
**dass** die Dicke der äußeren Glasscheiben (1) und der inneren Glasscheiben (2) jeweils etwa 5 mm und die Schichtdicke der Brandschutzschichten (3) und ggf. Klebeschichten jeweils etwa 1 mm beträgt.

6. Glasplatte nach Anspruch 5, **dadurch gekennzeichnet,**
**dass** die Gesamtdicke der Mehrscheiben-Verbundglasplatte mit zwei äußeren Glasscheiben (1) und zwei inneren Glasscheiben (2) etwa 23 mm beträgt.

7. Glasplatte nach Anspruch 5 oder 6, **dadurch gekennzeichnet,**
**dass** die Dicke der Streifen aus Abschlussmaterial (5) etwa 11 bis 12 mm beträgt,

8. Glasplatte nach einem der Ansprüche 3 bis 7, **dadurch gekennzeichnet,**
**dass** die Mehrscheiben-Verbundglasplatte rahmenlos ausgeführt ist.

9. Glasplatte nach Anspruch 8, **dadurch gekennzeichnet,**
**dass** die Mehrscheiben-Verbundglasplatte als rahmenloses Türblatt, als rahmenloser Fensterflügel oder Klappenflügel oder als rahmenloses Oberlicht ausgeführt ist.

## Claims

1. Glass plate, preferably a multi-pane laminated glass plate, comprising at least one through-opening (7) for a pin (8) of a hinge (9) or of a mounting, the through-opening (7) being reinforced on the inner side by means of a sleeve (10), **characterized in that** the sleeve (10) consists of hardwood.

2. Glass plate according to Claim 1, **characterized in that** the hardwood sleeve (10) consists of an armoured plywood or a multiplex wood impregnated with phenolic resin and adhesively bonded.

3. Glass plate according to Claim 1 or 2, **characterized in that** it is formed as a multi-pane laminated glass plate comprising an outer glass pane (1) on each side and at least one inner glass pane (2) arranged between the outer glass panes (1) and comprising at least one thin intumescent layer (3), of a transparent intumescent material that expands when heated and forms a heat shield, arranged between an outer glass plane (1) and an inner glass pane (2) or between two inner glass panes (2), **in that** the length and width dimensions of the outer glass panes (1) are substantially identical, **in that** the length and width dimensions of the inner glass pane (2) or the inner glass panes (2) are smaller than the length and width dimensions of the outer glass panes (1) in such a way that the outer glass panes (1) extend beyond the inner glass pane (2) or the inner glass panes (2) at the edges, and **in that** the strip-like clearance (4) formed by the projecting edges of the outer glass panes (1) and the edge or the edges of the inner glass pane (2) or glass panes (2) is filled with a transparent closing-off material (5) in a sealed and preferably externally flush manner, the transparent closing-off material (5) preferably having a refractive index the same as or similar to that of the glass panes (1, 2).

4. Glass plate according to Claim 3, **characterized in that** the sleeve (10) is dimensioned such that it fills the through-opening (7) in the glass plate with a snug fit and acts as a seal for the intumescent layers (3).

5. Glass plate according to Claim 3 or 4, **characterized in that** the thickness of the outer glass panes (1) and of the inner glass panes (2) is respectively about 5 mm and the layer thickness of the intumescent layers (3) and any adhesive layers is respectively about 1 mm.

6. Glass plate according to Claim 5, **characterized in that** the overall thickness of the multi-pane laminated glass plate comprising two outer glass panes (1) and two inner glass panes (2) is about 23 mm.

7. Glass plate according to Claim 5 or 6, **characterized in that** the thickness of the strips of closing-off material (5) is about 11 to 12 mm.

8. Glass plate according to one of Claims 3 to 7, **characterized in that** the multi-pane laminated glass plate is of a frameless form.

9. Glass plate according to Claim 8, **characterized in that** the multi-pane laminated glass plate is formed as a frameless door leaf, as a frameless window sash or casement or top-hung sash or casement or as a frameless skylight.

## Revendications

1. Vitre, de préférence vitre feuilletée multicouches, présentant :
au moins une ouverture (7) permettant le passage d'un goujon (8) d'une charnière (9) ou d'un support,
le côté intérieur de l'ouverture de passage (7) étant renforcé au moyen d'une douille (10), **caractérisée en ce que**
la douille (10) est constituée de bois dur.

2. Vitre selon la revendication 1, **caractérisée en ce que** la douille (10) en bois dur est formée de bois blindé ou de bois multiplex imprégné de résine phénolique et collé.

3. Vitre selon les revendications 1 ou 2, **caractérisée en ce qu'**elle est réalisée sous la forme d'une vitre feuilletée multicouches présentant sur chaque face une feuille de verre extérieure (1), d'au moins une couche (3) de protection contre le feu en matériau transparent de protection contre le feu qui mousse lorsqu'elle est chauffée et qui forme une protection contre la chaleur, disposée entre une feuille de verre extérieure (1) et une feuille de verre inférieure (2) ou entre deux feuilles de verre intérieures (2), **en ce que** les dimensions longueur et largeur des feuilles de verre extérieures (1) sont essentiellement identiques, **en ce que** les dimensions longueur et largeur de la feuille de verre intérieure (2) ou des feuilles de verre intérieures (2) sont plus petites que les dimensions longueur et largeur des feuilles de verre extérieures (1), de telle sorte que les feuilles de verre extérieures (1) débordent des bords de la feuille de verre intérieure (2) ou des feuilles de verre intérieures (2), et **en ce que** l'espace libre (4) en forme de ruban formé par les bords des feuilles de verre extérieures (1) et le bord ou les bords de la feuille de verre intérieure (2) ou des feuilles de verre intérieures (2) est rempli complètement d'un matériau transparent de fermeture (5), de préférence à chant avec le côté extérieur, le matériau transparent de fermeture (5) présentant de préférence le même indice de réfraction que les feuilles de verre (1, 2) ou un indice de réfraction similaire.

4. Vitre selon la revendication 3, **caractérisée en ce que** la douille (10) est dimensionnée de telle sorte qu'elle remplit étroitement l'ouverture de passage (7) ménagée dans la vitre et sert de joint d'étanchéité pour les couches (3) de protection contre le feu.

5. Vitre selon les revendications 3 ou 4, **caractérisée en ce que** l'épaisseur des feuilles de verre extérieures (1) et des feuilles de verre intérieures (2) est chaque fois d'environ 5 mm et **en ce que** l'épaisseur des couches (3) de protection contre le feu et des éventuelles couches d'adhésif est chaque fois d'environ 1 mm.

6. Vitre selon la revendication 5, **caractérisée en ce que** l'épaisseur totale de la vitre feuilletée multicouches est d'environ 23 mm lorsqu'elle présente deux feuilles de verre extérieures (1) et deux feuilles de verre intérieures (2).

7. Vitre selon les revendications 5 ou 6, **caractérisée en ce que** l'épaisseur des rubans en matériau de fermeture (5) est d'environ 11 à 12 mm.

8. Vitre selon l'une des revendications 3 à 7, **caractérisée en ce que** la vitre feuilletée multicouches est dépourvue d'encadrement.

9. Vitre selon la revendication 8, **caractérisée en ce que** la vitre feuilletée multicouches est réalisée sous la forme d'une feuille de porte sans encadrement, d'un ouvrant de fenêtre ou ouvrant de clapet sans encadrement ou comme lucarne sans encadrement.
